# EUROPÄISCHE PATENTSCHRIFT

(11) **EP 2 116 328 B1**
(45) Veröffentlichungstag und Bekanntmachung des Hinweises auf die Patenterteilung: **15.09.2010**
(21) Anmeldenummer: 09004518.8
(22) Anmeldetag: 28.03.2009
(51) Int. Cl.: B23Q 16/04, B23D 45/00

(54) **Werkzeugmaschinenanordnung mit einer Knackfrosch-Verrastungsvorrichtung**
Machine tool assembly with a clicker-type locking device
Agencement de machine-outil avec un dispositif d'enclenchement à déclic

(30) Priorität: 08.05.2008 DE 202008006374 U
(43) Veröffentlichungstag der Anmeldung: 11.11.2009
(73) Patentinhaber: Metabowerke GmbH, 72622 Nürtingen (DE)
(72) Erfinder: Engelmann, Marcus, 49716 Meppen (DE)
(74) Vertreter: Lorenz, Markus

(56) Entgegenhaltungen:
- US-A- 2 531 246
- US-A- 5 249 496

## Beschreibung

Die Erfindung betrifft eine Werkzeugmaschinenanordnung mit den Merkmalen des Oberbegriffs von Anspruch 1 oder 2.

Unter Werkzeugmaschinen anordnung im Sinne der vorliegenden Erfindung ist eine Kapp-und gehrungssäge oder die seitliche Tischverbreiterung einer Werkzeugmaschine oder eines Maschinenständers zu verstehen.

Wesentlich für eine Werkzeugmaschinenanordnung der in Rede stehenden Art ist die Existenz eines feststehenden Maschinenteils und eines relativ zu diesem feststehenden Maschinenteil bewegbaren Maschinenteils. Dieses ist gegenüber dem feststehenden Maschinenteil entweder längsverschiebbar oder drehbar. Wesentlich ist ferner, daß zwischen den beiden Maschinenteilen eine Verrastungsvorrichtung wirksam ist, durch die das bewegbare Maschinenteil gegenüber dem feststehenden Maschinenteil in unterschiedlichen Positionen rastend festlegbar ist.

Die bekannte Werkzeugmaschinenanordnung, von der die Erfindung ausgeht (DE-B4-43 22 672), ist eine Kapp- und Gehrungssäge mit einer das feststehende Maschinenteil bildenden Basis und einem in der Basis eingelassenen Drehtisch, an dem sich über eine Schwenklagerung das Sägeaggregat befindet. Zwischen dem Drehtisch und der Basis ist eine Verrastungsvorrichtung wirksam, die das Einstellen des Drehtisches relativ zur Basis in bestimmten, häufig auftretenden Winkelpositionen erlaubt. Derartige typische Winkel sind beispielsweise 30° und 45°.

Um die zuvor geschilderte Funktion zu realisieren, weist die Verrastungsvorrichtung an einem der Maschinenteile, hier am feststehenden Maschinenteil, nämlich der Basis, an den vorgegebenen Winkelpositionen jeweils eine Rastausformung in Form einer Rastnut auf. Am anderen Maschinenteil, nämlich dem bewegbaren Maschinenteil, hier dem Drehtisch, weist die Verrastungsvorrichtung ein in die Rastausformung einrastendes Rastelement, hier in Form einer Rastkugel, auf. Die Verrastungsvorrichtung weist ferner ein das Rastelement in Einrastrichtung vorspannendes Federelement und ein das Rastelement beeinflussendes Betätigungselement auf. Das Federelement ist eine großflächige Blattfeder aus Federstahl, die am bewegbaren Maschinenteil angebracht und durch Drücken auf das Betätigungselement nach unten wegbiegbar ist. Das Betätigungselement ist eine am Federelement winkelförmig abgebogene Drucktaste. Durch Beaufschlagen, insbesondere hier durch Drücken des Betätigungselementes kann das Rastelement, hier also die Rastkugel, entgegen der Federkraft des Federelementes außer Eingriff mit der Rastausformung, hier der Rastnut, gebracht werden.

Bei der zuvor beschriebenen, bekannten Werkzeugmaschinenanordnung kann man das Betätigungselement über einen bestimmten Betätigungsweg nach unten drücken und damit die Rastkugel außer Eingriff mit der Rastnut halten. Wenn man in dieser Position den Drehtisch gegenüber der Basis etwas dreht, kann man das Betätigungselement wieder loslassen. Die Rastkugel wird unter der Wirkung des Federelementes wieder gegen die Unterseite der Basis gedrückt. Wird der Drehtisch weiter in Richtung der nächsten vorgegebenen Winkelposition gedreht, so rastet die Rastkugel unter Wirkung des Federelementes von selbst in der dort befindlichen Rastnut ein.

Bei der bekannten, zuvor erläuterten Werkzeugmaschinenanordnung kann man durch weiteres Drücken des Betätigungselementes und Bewegen des Betätigungselementes über einen größeren Betätigungsweg das Betätigungselement seinerseits in einer Lösestellung verrasten, so daß die Federkraft des Federelementes unwirksam gemacht ist.

Die Verrastungsvorrichtung der bekannten Werkzeugmaschinenanordnung läßt sich nicht nur bei den dort verwirklichten Maschinenteilen realisieren, sondern überall dort, wo ein bewegbares Maschinenteil gegenüber einem feststehenden Maschinenteil in bestimmten vorgegebenen Positionen rastend festgelegt werden soll. Das kann beispielsweise auch eine Stangenführung für eine seitliche Tischverbreiterung an einer Tischkreissäge sein oder für einen Auszug eines Maschinenständers.

Unabhängig von der genauen Ausgestaltung der Verrastungsvorrichtung und ihres Federelementes (Schraubendruckfeder, Zugfeder, Schenkelfeder, Blattfeder) ergibt sich für das Federelement immer ein vergleichsweise gleichmäßiger Kraft/Weg-Verlauf beim Betätigen des Betätigungselementes. Das Betätigungselement erlaubt also eine analoge Betätigung des Rastelementes entgegen Federkraft.

Der Lehre liegt das Problem zugrunde, die bekannte Werkzeugmaschinenanordnung hinsichtlich der Verrastungsvorrichtung so auszugestalten und weiterzubilden, daß eine Betätigung mit einer eher digitalen Charakteristik gegeben ist.

Das zuvor aufgezeigte Problem ist bei einer Werkzeugmaschinenanordnung mit den Merkmalen des Oberbegriffs von Anspruch 1 oder 2 durch die Merkmale des kennzeichnenden Teils von Anspruch 1 oder 2 gelöst. Bevorzugte Ausgestaltungen und Weiterbildungen sind Gegenstand der Unteransprüche.

Erfindungsgemäß ist das Federelement als Feder mit einer Kippfunktion ausgeführt. Die Federcharakteristik des erfindungsgemäß realisierten Federelementes ist konstruktiv so ausgelegt, daß einer Betätigung des Betätigungselementes bei Beginn eine hohe Federkraft entgegenwirkt. Nach einem bestimmten Betätigungsweg wird die Federkraft des Federelementes jedoch schlagartig sehr klein, das Federelement "kippt" in einen Bereich geringer Federkraft. Über den Rest des Betätigungsweges des Betätigungselementes bleibt dann die Federkraft sehr klein bzw. steigt nur noch geringfügig an.

Mit der erfindungsgemäßen Gestaltung des Federelementes gewinnt man eine digitale Betätigungsfunktion der Verrastungsvorrichtung. Der Vorteil jeder digitalen Betätigung ist hier mechanisch realisiert, nämlich die klare Unterscheidung zweier Betätigungszustände, hier der Zustände "Verriegelt" und "Entriegelt". Undefinierte Zwischenstellungen können vermieden werden. Durch die hohe Federkraft bei Beginn der Betätigung des Betätigungselementes wird auch die Verrastung des Rastelementes mit der Rastausformung mit entsprechend hoher Federkraft eingehalten. Nach Überschreiten des Kippunktes hingegen wirkt nur noch eine geringe Federkraft, man kann das Betätigungselement mit geringem Kraftaufwand in der Entriegelungsstellung halten.

Von besonderer Bedeutung für die Lehre der Erfindung ist die konstruktive Ausgestaltung des Federelementes. Nach bevorzugter Lehre ist vorgesehen, daß das schlagartige Abfallen der Federkraft des Federelementes durch eine entsprechend schlagartige Formänderung des Federelementes verursacht wird. Die Formänderung kann nach weiter bevorzugter Lehre mit einem hörbaren Knackton (Knackfroscheffekt) einhergehen.

Insbesondere dann, wenn das Federelement als Metall-Biegefeder ausgeführt ist, und zwar bevorzugt als Streifen aus Federstahl, kann man die schlagartige Formänderung dadurch realisieren, daß der Streifen aus Federmaterial im Ruhezustand in Längsrichtung verlaufend entgegen der Richtung der Betätigung durch das Betätigungselement konvex gewölbt ist. Der Streifen aus Federmaterial, insbesondere Federstahl, ist also in Längsrichtung gewissermaßen wannenartig gewölbt. Beim Betätigen des Betätigungselementes muß man zunächst die wannenartige Vorform "durchdrücken", was mit einem hohen Kraftaufwand verbunden ist. Danach wirkt nur noch die normale Federkraft der im wesentlichen ebenen Biegefeder, die entsprechend deutlich geringer ist.

Nach bevorzugter weiterer Lehre ist vorgesehen, daß die konvexe Wölbung des Streifens aus Federmaterial nicht stetig realisiert ist, sondern dadurch, daß das Federelement ungefähr in der Längsmitte V-förmig geknickt ist. Auch eine mehrfache Knickung ist eine mögliche Variante.

Zu der konstruktiven Anordnung des Federelementes der Verrastungsvorrichtung in der Werkzeugmaschinenanordnung empfiehlt es sich, daß der maximale Federweg des Federelementes durch einen Anschlag oder eine zweiseitige Halterung begrenzt ist. Eine Überdehnung des Federelementes wird vermieden, zusätzliche Bauteile, insbesondere das Betätigungselement, können damit gleichzeitig fixiert werden.

Wie bereits eingangs ausgeführt worden ist, kann man die erfindungsgemäße Verrastungsvorrichtung bei Werkzeugmaschinenanordnungen der in Rede stehenden Art an ganz unterschiedlichen Stellen anbringen. Bevorzugt ist ein Anbringen zwischen einer Basis und einem Drehtisch einer Kapp- und Gehrungssäge oder die Anbringung zwischen einer Basis und einer Tragstange einer seitlichen Tischverbreiterung, sei es an einer Tischkreissäge, einer Kapp- und Gehrungssäge oder einem Maschinenständer.

Bislang ist aus Gründen besserer Verständlichkeit immer von einer Verrastungsvorrichtung im engeren Sinne mit Rastausformung und darin einrastendem Rastelement, also mit einer formschlüssigen Funktionspaarung die Rede gewesen. Die Grundidee der vorliegenden Lehre kann aber auch dann realisiert werden, wenn eine Verrastungsvorrichtung im weiteren Sinne realisiert ist, bei der keine formschlüssige Paarung, sondern eine reibschlüssige Paarung aus Reibfläche und Klemmelement statt Rastausformung und Rastelement vorliegt. Die Lehre der Erfindung soll ausdrücklich auch eine solche Klemmvorrichtung als Verrastungsvorrichtung im weiteren Sinne mit einschließen.

Im folgenden wird die Erfindung anhand einer lediglich ein Ausführungsbeispiel darstellenden Zeichnung näher erläutert. In der Zeichnung zeigt
- Fig. 1: in einer Draufsicht eine Kapp- und Gehrungssäge,
- Fig. 2: den rechten Randbereich des Tisches aus Fig. 1 mit davon seitlich abgezogener Tischverbreiterung,
- Fig. 3: in schematischer Darstellung eine erfindungsgemäß verwirklichte Verrastungsvorrichtung in Verriegelungsstellung,
- Fig. 4: die Verrastungsvorrichtung aus Fig. 3 in Entriegelungsstellung, das Betätigungselement manuell beaufschlagt.

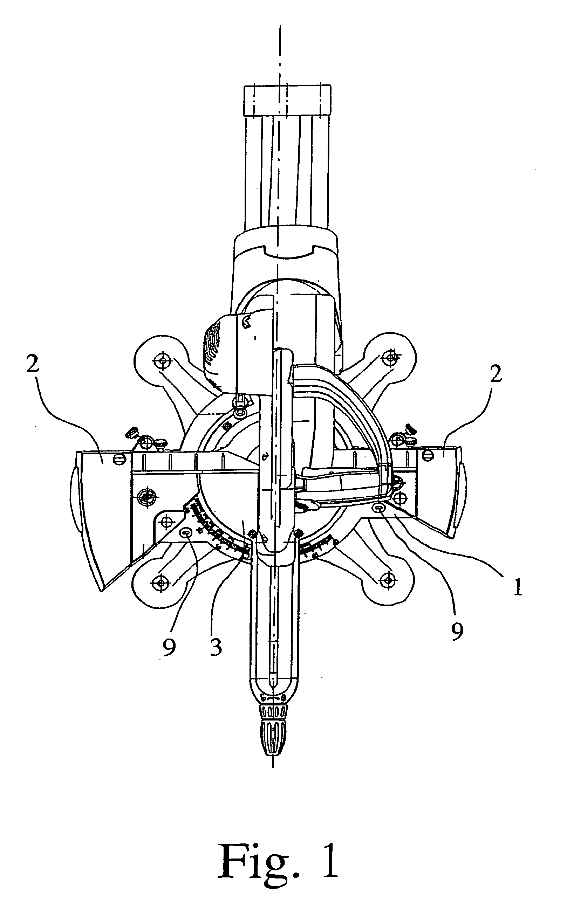

Die in Fig. 1 dargestellte Werkzeugmaschinenanordnung zeigt eine Kapp- und Gehrungssäge als ein besonderes Beispiel einer erfindungsgemäßen Werkzeugmaschinenanordnung.

Im dargestellten Ausführungsbeispiel sieht man zunächst einen feststehenden Maschinenteil 1, hier die Basis einer Kapp- und Gehrungssäge.

Vorgesehen ist auch ein relativ zu dem feststehenden Maschinenteil 1 bewegbares Maschinenteil 2, nämlich in Form einer längsverschiebbar an der Basis 1 angeordneten Tischverbreiterung 2. Im dargestellten und bevorzugten Ausführungsbeispiel sieht man auch noch ein weiteres bewegbares Maschinenteil 3 in Form eines Drehtisches. Auf letzteres wird aber in der folgenden Beschreibung aber nicht weiter eingegangen.

Das hier interessierende bewegbare Maschinenteil 2 in Form einer Tischverbreiterung 2 findet man zum einen rechts an der Basis 1, zum anderen auch links an der Basis 1.

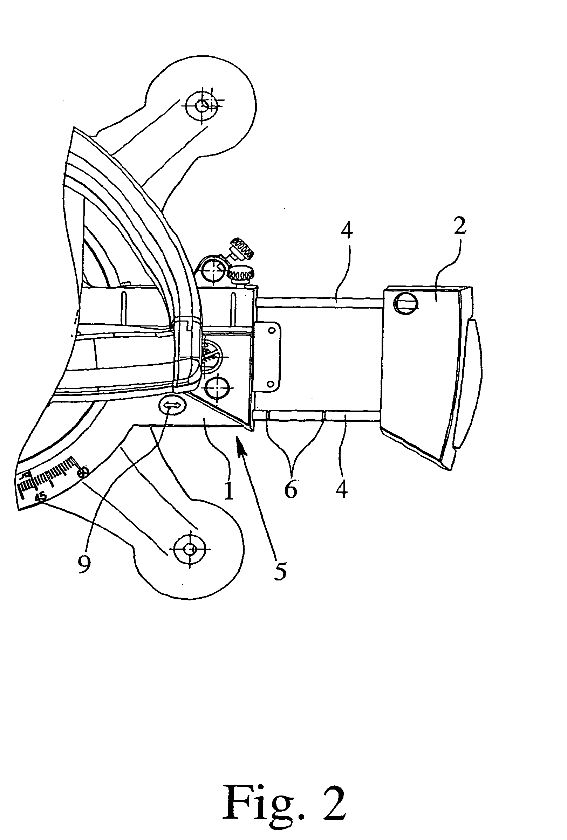

Man erkennt in Fig. 2 das bewegbare Maschinenteil 2, nämlich die Tischverbreiterung, an zwei parallel zueinander verlaufenden Tragstangen 4, die aus entsprechenden Führungen 10 in der Basis 1 herausgezogen werden können.

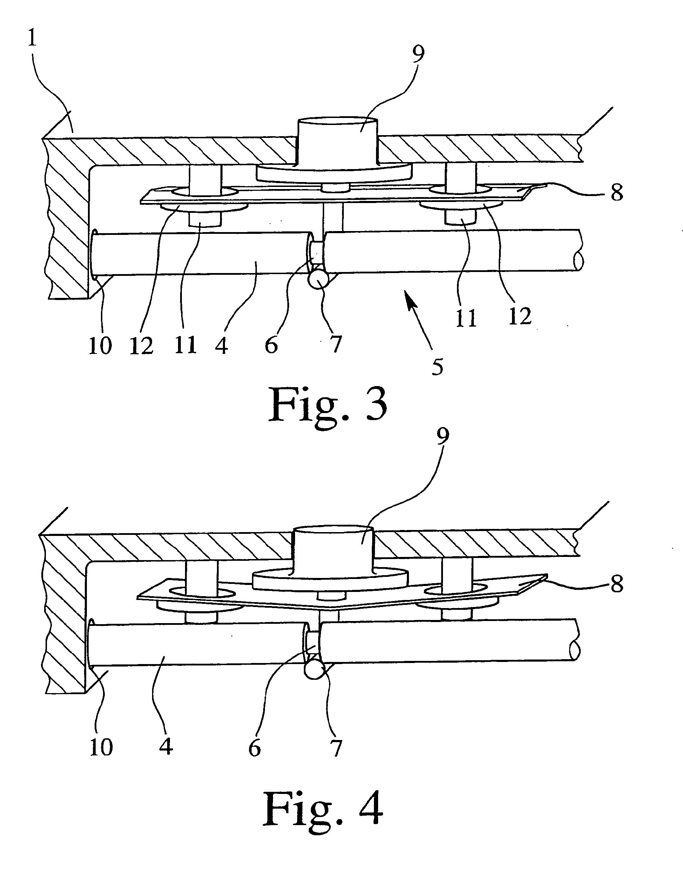

Zwischen den Maschinenteilen 1, 2 ist eine Verrastungsvorrichtung 5 wirksam, die in Fig. 3 und 4 genauer dargestellt ist.

Die Verrastungsvorrichtung 5 hat an einem Maschinenteil, hier dem bewegbaren Maschinenteil 2, mindestens eine Rastausformung 6, hier an einer Tragstange 4 zwei Rastausformungen 6 in Form von Ringnuten. Am anderen Maschinenteil 1, hier also an der Basis, befindet sich ein in die jeweilige Rastausformung 6 einrastendes Rastelement 7, in Fig. 3 und 4 dargestellt als eine Art Bügel. Vorgesehen als Teil der Verrastungsvorrichtung 5 ist auch ein das Rastelement 7 in Einrastrichtung vorspannendes Federelement 8 sowie ein das Rastelement 7 beaufschlagendes Betätigungselement 9, und zwar in Form eines Druckknopfes oder einer Drucktaste.

Durch Beaufschlagung, insbesondere hier durch Drücken des Betätigungselementes 9 wird das Rastelement 7 entgegen der Federkraft des Federelementes 8 außer Eingriff mit der Rastausformung 6 gebracht. Man erkennt dies aus Fig. 4 im Vergleich mit Fig. 3. Der das Betätigungselement 9 bildende Druckknopf ist in Fig. 4 gedrückt, das bügelartige Rastelement 7 ist aus der Ringnut, die die Rastausformung 6 bildet, herausgehoben. Die Tragstange 4 der seitlichen Tischverbreiterung 2 kann in der Führung 10 längsverschoben werden.

Fig. 3 und 4 zeigen nun im Zusammenhang den wesentlichen "Witz" der Lehre der Erfindung, nämlich daß das Federelement 8 als Feder mit einer Kippfunktion ausgeführt ist, die bezüglich ihrer Federcharakteristik konstruktiv so ausgelegt ist, daß einer Betätigung des Betätigungselementes 9 bei Beginn eine hohe Federkraft entgegenwirkt, nach einem bestimmten Betätigungsweg die Federkraft schlagartig sehr klein wird und über den Rest des Betätigungsweges klein bleibt.

Ein Vergleich von Fig. 3 und 4 macht deutlich, daß die zuvor erläuterte besondere Federcharakteristik dadurch realisiert wird, daß das schlagartige Abfallen der Federkraft durch eine entsprechend schlagartige Formänderung des Federelementes 8 verursacht wird.

Im dargestellten und bevorzugten Ausführungsbeispiel ist ferner vorgesehen, daß das Federelement 8 so ausgelegt ist, daß es beim schlagartigen Abfallen der Federkraft einen hörbaren Knackton erzeugt. Damit erhält man für die digitale Funktion der Verrastungsvorrichtung 5 auch noch einen akustischen Effekt (Knackfroscheffekt).

Wie bereits zum den Ausgangspunkt bildenden Stand der Technik erläutert worden ist, kann man im Grundsatz für das Federelement 8 übliche Federtypen verwenden. Von besonderer Bedeutung ist allerdings eine Ausgestaltung, die dadurch gekennzeichnet ist, daß das Federelement 8 als Metall-Biegefeder ausgeführt ist. Insbesondere ist im dargestellten und bevorzugten Ausführungsbeispiel vorgesehen, daß das Federelement 8 als Streifen aus Federmaterial, insbesondere aus Federstahl, ausgeführt ist, der in Längsrichtung verlaufend entgegen der Richtung der Betätigung durch das Betätigungselement 9 konvex gewölbt ist.

Man sieht in Fig. 3 die nach oben gewölbte, wannenartige Gestaltung des das Federelement 8 bildenden Streifens aus Federmaterial, hier Federstahl. Drückt man auf das Betätigungselement 9, so muß diese Wölbung zunächst "durchgedrückt" werden, wodurch sich die hohe Federkraft am Beginn des Betätigungswegs des Betätigungselementes 9 erklärt. Ist das so konvex gewölbte Federelement 8 erst einmal durchgedrückt, läßt die Federkraft schlagartig nach, dann wirkt das streifenartige Federelement 8 als einfache Blattfeder.

Im Grundsatz kann der Streifen aus Federmaterial auch aus einem entsprechend federelastischen Kunststoff bestehen. Federstahl dürfte aber auf lange Sicht die verschleißfestere Alternative sein.

Das dargestellte und bevorzugte Ausführungsbeispiel läßt in Fig. 3 gut erkennen, daß hier der das Federelement 8 bildende Streifen zur Bildung der konvexen Wölbung ungefähr in der Längsmitte V-förmig geknickt ist. Auch mehrere seitlich beabstandete Knicklinien kommen in Frage.

In der Zeichnung sind die verschiedenen Elemente als einzelne Teile dargestellt. Grundsätzlich ist es auch möglich, daß das Rastelement 7 und das Betätigungselement 9 einteilig, insbesondere einstückig, ausgeführt sind. Es ist auch möglich, das Federelement 8 noch in diesen Verbund einzubeziehen, wenn man mit entsprechenden Werkstoffkombinationen arbeitet. Es kann sich also beispielsweise um ein Metallteil mit einem angespritzten Kunststoffverbund handeln.

Um ein Überdehnen des Federelementes 8 zu verhindern, kann man vorsehen, daß der maximale Federweg des Federelementes 8 durch einen Anschlag oder eine zweiseitige Halterung 11 des Federelementes 8 begrenzt ist. Im dargestellten Ausführungsbeispiel sieht man rechts und links jeweils eine Halterung 11 mit einem entsprechenden Klemmring 12.

Fig. 4 im Vergleich mit Fig. 3 läßt die Betätigung des Betätigungselementes 9 erkennen, mit der das Rastelement 7 aus der Rastausformung 6 an der Tragstange 4 ausgehoben wird. Der Federweg des Federelementes 8 ist durch die beidseitigen Halterungen 11 begrenzt, das Federelement 8 kann nicht überdehnt werden.

Wie bereits im allgemeinen Teil der Beschreibung erläutert worden ist, kann man die erfindungsgemäß ausgestaltete Werkzeugmaschinenanordnung in einer anderen Variante realisieren, als seitliche Tischverbreiterung einer Werkzeugmaschine oder eines Maschinenständers.

Nicht dargestellt ist in der Zeichnung die Möglichkeit, eine Verrastungsvorrichtung im weiteren Sinne, nämlich nicht mit einer formschlüssigen Paarung Rastausformung / Rastelement, sondern mit einer reibschlüssigen Paarung Reibfläche / Klemmelement zu realisieren. Auch dort ergeben sich die erfindungsrelevanten Vorteile einer gewissermaßen digitalen, mechanischen Betätigung des Betätigungselementes.

## Patentansprüche

1. Kapp- und Gehrungssäge
mit einer Basis als feststehendem Maschinenteil (1) und einem Drehtisch als relativ zu dem feststehenden Machinenteil (1) drehbaren Maschinenteil (2) und mit einer zwischen den Maschinenteilen (1, 2) wirksamen Verrastungsvorrichtung (5) oder reibschlüssigen Klemmvorrichtung,
wobei die Verrastungsvorrichtung (5) an einem Maschinenteil (2) mindestens eine Rastausformung (6) und am anderen Maschinenteil (1) ein in die Rastausformung (6) einrastendes Rastelement (7) aufweist oder die reibschlüssige Klemmvorrichtung an einem Maschinenteil (2) mindestens eine Reibfläche und am anderen Maschinenteil (1) ein an der Reibfläche anliegendes Klemmelement aufweist, wobei die Verrastungsvorrichtung (5) ein das Rastelement (7) in Einrastrichtung vorspannendes Federelement (8) oder die reibschlüssige Klemmvorrichtung ein das Klemmelement in Klemmrichtung vorspannendes Federelement (8) aufweist und wobei die Verrastungsvorrichtung (5) bzw. die reibschlüssige Klemmvorrichtung ein das Rastelement (7) bzw. das Klemmelement beaufschlagendes Betätigungselement (9) insbesondere in Form einer Drucktaste aufweist,
wobei durch Beaufschlagung des Betätigungselements (9) insbesondere durch Drücken das Rastelement (7) bzw. das Klemmelement entgegen der Federkraft des Federelementes (8) außer Eingriff mit der Rastausformung (6) bzw. der Reibfläche bringbar ist, **dadurch gekennzeichnet,**
**daß** das Federelement (8) als Feder mit einer Kippfunktion ausgeführt ist, d. h. bezüglich ihrer Federcharakteristik konstruktiv so ausgelegt ist, daß einer Betätigung des Betätigungselementes (9) bei Beginn eine hohe Federkraft entgegenwirkt, nach einem bestimmten Betätigungsweg die Federkraft schlagartig sehr klein wird und über den Rest des Betätigungsweges klein bleibt.

2. Seitliche Tischverbreiterung einer Werkzeugmaschine oder eines Maschinenständers
mit einer Basis als feststehendem Maschinenteil (1) und einer Tragstange der Tischverbreiterung als relativ zu dem zu dem feststehenden Maschinenteil (1) langsverschiebbaren Maschinenteil (2) und mit einer zwischen den Maschinenteilen (1, 2) wirksamen Verrastungsvorrichtung (5) oder reibschlüssigen Klemmvorrichtung,
wobei die Verrastungsvorrichtung (5) an einem Maschinenteil (2) mindestens eine Rastausformung (6) und am anderen Maschinenteil (1) ein in die Rastausformung (6) einrastendes Rastelement (7) aufweist oder die reibschlüssige Klemmvorrichtung an einem Maschinenteil (2) mindestens eine Reibfläche und am anderen Maschinenteil (1) ein an der Reibfläche anliegendes Klemmelement aufweist,
wobei die Verrastungsvorrichtung (5) ein das Rastelement (7) in Einrastrichtung vorspannendes Federelement (8) oder die reibschlüssige Klemmvorrichtung ein das Klemmelement in Klemmrichtung vorspannendes Federelement (8) aufweist und wobei die Verrastungsvorrichtung (5) bzw. die reibschlüssige Klemmvorrichtung ein das Rastelement (7) bzw. das Klemmelement beaufschlagendes Betätigungselement (9)
insbesondere in Form einer Drucktaste aufweist,
wobei durch Beaufschlagung des Betätigungselements (9) insbesondere durch Drücken das Rastelement (7) bzw. das Klemmelement entgegen der Federkraft des Federelementes (8) außer Eingriff mit der Rastausformung (6) bzw. der Reibfläche bringbar ist,
**dadurch gekennzeichnet,**
**daß** das Federelement (8) als Feder mit einer Kippfunktion ausgeführt ist, d. h. bezüglich ihrer Federcharakteristik konstruktiv so ausgelegt ist, daß einer Betätigung des Betätigungselementes (9) bei Beginn eine hohe Federkraft entgegenwirkt, nach einem bestimmten Betätigungsweg die Federkraft schlagartig sehr klein wird und über den Rest des Betätigungsweges klein bleibt.

3. Vorrichtung nach Anspruch 1 oder 2, **dadurch gekennzeichnet,**
**daß** das schlagartige Abfallen der Federkraft durch eine entsprechende schlagartige Formänderung des Federelementes (8) verursacht wird.

4. Vorrichtung nach einem der Ansprüche 1 bis 3, **dadurch gekennzeichnet,**
**daß** das Federelement (8) so ausgelegt ist, daß es beim schlagartigen Abfallen der Federkraft einen hörbaren Knackton erzeugt.

5. Vorrichtung nach einem der Ansprüche 1 bis 4, **dadurch gekennzeichnet,**
**daß** das Federelement (8) als Metall-Biegefeder ausgeführt ist.

6. Vorrichtung nach einem der Ansprüche 1 bis 5, **dadurch gekennzeichnet,**
**daß** das Federelement (8) als Streifen aus Federmaterial, insbesondere aus Federstahl, ausgeführt ist, der in Längsrichtung verlaufend entgegen der Richtung der Betätigung durch das Betätigungselement (9) konvex gewölbt ist.

7. Vorrichtung nach Anspruch 6, **dadurch gekennzeichnet,**
**daß** der das Federelement (8) bildende Streifen zur Bildung der konvexen Wölbung ungefähr in der Längsmitte V-förmig geknickt ist oder daß der Streifen in Längsrichtung nebeneinander mehrfach geknickt ist.

8. Vorrichtung nach einem der Ansprüche 1 bis 7, **dadurch gekennzeichnet,**
**daß** das Rastelement (7) und das Betätigungselement (9), ggf. mit dem Federelement (8), einteilig, insbesondere einstückig, ausgeführt sind.

9. Vorrichtung nach einem der Ansprüche 1 bis 8, **dadurch gekennzeichnet,**
**daß** der maximale Federweg des Federelementes (8) durch einen Anschlag oder eine zweiseitige Halterung (11) des Federelementes (8) begrenzt ist.

10. Vorrichtung nach einem der Ansprüche 1 bis 9, **dadurch gekennzeichnet,**
**daß** das Betätigungselement (9) als Drucktaste ausgeführt und durch Drücken betätigbar ist.

## Claims

1. Crosscut and mitre saw
having a base as a fixed machine part (1) and a turntable as a machine part (2) that is able to rotate relative to the fixed machine part (1) and having a locking device (5) or frictional clamping device acting between the machine parts (1, 2),
wherein the locking device (5) has, on one machine part (2), at least one latching recess (6) and, on the other machine part (1), a latching element (7) latching in the latching recess (6), or the frictional clamping device has, on one machine part (2), at least one friction surface and, on the other machine part (1), a clamping element bearing against the friction surface, wherein the locking device (5) has a spring element (8) prestressing the latching element (7) in the latching-in direction, or the frictional clamping device has a spring element (8) prestressing the clamping element in the clamping direction, and
wherein the locking device (5) or the frictional clamping device has an actuating element (9), in particular in the form of a push button, acting on the latching element (7) or the clamping element, wherein, by acting on the actuating element (9), in particular by pressing, the latching element (7) or the clamping element can be brought out of engagement with the latching recess (6) or the friction surface counter to the spring force of the spring element (8),
**characterized**
**in that** the spring element (8) is configured as a spring having a tilting function, i.e. is structurally designed with regard to its spring characteristic such that a strong spring force initially counteracts actuation of the actuating element (9), after a particular actuation travel the spring force suddenly becomes very weak and it remains weak over the rest of the actuation travel.

2. Lateral table extension of a machine tool or of a machine column
having a base as a fixed machine part (1) and a supporting rod of the table extension as a machine part (2) that is longitudinally displaceable relative to the fixed machine part (1) and having a locking device (5) or frictional clamping device acting between the machine parts (1, 2),
wherein the locking device (5) has, on one machine part (2), at least one latching recess (6) and, on the other machine part (1), a latching element (7) latching in the latching recess (6), or the frictional clamping device has, on one machine part (2), at least one friction surface and, on the other machine part (1), a clamping element bearing against the friction surface, wherein the locking device (5) has a spring element (8) prestressing the latching element (7) in the latching in direction, or the frictional clamping device has a spring element (8) prestressing the clamping element in the clamping direction, and
wherein the locking device (5) or the frictional clamping device has an actuating element (9), in particular in the form of a push button, acting on the latching element (7) or the clamping element, wherein, by acting on the actuating element (9), in particular by pressing, the latching element (7) or the clamping element can be brought out of engagement with the latching recess (6) or the friction surface counter to the spring force of the spring element (8),
**characterized**
**in that** the spring element (8) is configured as a spring having a tilting function, i.e. which is structurally designed with regard to its spring characteristic such that a strong spring force initially counteracts actuation of the actuating element (9), after a particular actuation travel the spring force suddenly becomes very weak and it remains weak over the rest of the actuation travel.

3. Device according to Claim 1 or 2, **characterized**
**in that** the sudden drop in the spring force is caused by a corresponding sudden change in shape of the spring element (8).

4. Device according to one of Claims 1 to 3, **characterized**
**in that** the spring element (8) is designed such that it generates an audible click when the sudden drop in the spring force occurs.

5. Device according to one of Claims 1 to 4, **characterized**
**in that** the spring element (8) is configured as a metal bending spring.

6. Device according to one of Claims 1 to 5, **characterized**
**in that** the spring element (8) is configured as a strip of spring material, in particular of spring steel, which, extending in the longitudinal direction, has a convex curvature counter to the direction of actuation by the actuating element (9).

7. Device according to Claim 6, **characterized**
**in that**, in order to form the convex curvature, the strip forming the spring element (8) has a V-shaped kink approximately in the longitudinal centre, or in that the strip has a plurality of adjacent kinks in the longitudinal direction.

8. Device according to one of Claims 1 to 7, **characterized**
**in that** the latching element (7) and the actuating element (9), if appropriate with the spring element (8), are configured as one part, in particular integrally.

9. Device according to one of Claims 1 to 8, **characterized**
**in that** the maximum spring travel of the spring element (8) is limited by a stop or a two-sided holder (11) of the spring element (8).

10. Device according to one of Claims 1 to 9, **characterized**
**in that** the actuating element (9) is configured as a pushbutton and can be actuated by being pressed.

## Revendications

1. Scie à onglet radiale, avec une base comme partie de machine stationnaire (1) et une table rotative comme partie de machine (2) pouvant tourner par rapport à la partie de machine stationnaire (1) et avec un dispositif d'enclenchement (5) ou un dispositif de serrage à friction actif entre les parties de machine (1, 2), dans laquelle le dispositif d'enclenchement (5) présente sur une partie de machine (2) au moins un creux d'enclenchement (6) et sur l'autre partie de machine (1) un élément d'enclenchement (7) s'engageant dans le creux d'enclenchement (6) ou le dispositif de serrage à friction présente sur une partie de machine (2) au moins une face de friction et sur l'autre partie de machine (1) un élément de serrage s'appliquant sur la face de friction, dans laquelle le dispositif d'enclenchement (5) présente un élément de ressort (8) appliquant une précontrainte à l'élément d'enclenchement (7) dans la direction d'enclenchement ou le dispositif de serrage à friction présente un élément de ressort (8) appliquant une précontrainte à l'élément de serrage dans la direction de serrage, et dans laquelle le dispositif d'enclenchement (5) ou le dispositif de serrage à friction présente un élément de commande (9), en particulier sous la forme d'un bouton poussoir, actionnant l'élément d'enclenchement (7) ou l'élément de serrage, dans laquelle, en actionnant l'élément de commande (9) en particulier par pression, l'élément d'enclenchement (7) ou l'élément de serrage peut être amené hors d'engagement avec le creux d'enclenchement (6) ou la face de friction, contre la force élastique de l'élément de ressort (8), **caractérisée en ce que** l'élément de ressort (8) est réalisé sous la forme d'un ressort avec une fonction de basculement, c'est-à-dire qu'il est conçu, au niveau constructif en ce qui concerne sa caractéristique de ressort, de telle manière qu'une force élastique élevée s'oppose au commencement à un actionnement de l'élément de commande (9), que la force élastique devienne brusquement très petite après une course d'actionnement déterminée et qu'elle reste petite sur le reste de la course d'actionnement.

2. Rallonge latérale de table d'une machine-outil ou d'un bâti de machine, avec une base comme partie de machine stationnaire (1) et une barre de support de la rallonge de table comme partie de machine (2) pouvant être déplacée en longueur par rapport à la partie de machine stationnaire (1) et avec un dispositif d'enclenchement (5) ou un dispositif de serrage à friction actif entre les parties de machine (1, 2), dans laquelle le dispositif d'enclenchement (5) présente sur une partie de machine (2) au moins un creux d'enclenchement (6) et sur l'autre partie de machine (1) un élément d'enclenchement (7) s'engageant dans le creux d'enclenchement (6) ou le dispositif de serrage à friction présente sur une partie de machine (2) au moins une face de friction et sur l'autre partie de machine (1) un élément de serrage s'appliquant sur la face de friction, dans laquelle le dispositif d'enclenchement (5) présente un élément de ressort (8) appliquant une précontrainte à l'élément d'enclenchement (7) dans la direction d'enclenchement ou le dispositif de serrage à friction présente un élément de ressort (8) appliquant une précontrainte à l'élément de serrage dans la direction de serrage, et dans laquelle le dispositif d'enclenchement (5) ou le dispositif de serrage à friction présente un élément de commande (9), en particulier sous la forme d'un bouton poussoir, actionnant l'élément d'enclenchement (7) ou l'élément de serrage, dans laquelle, en actionnant l'élément de commande (9) en particulier par pression, l'élément d'enclenchement (7) ou l'élément de serrage peut être amené hors d'engagement avec le creux d'enclenchement (6) ou la face de friction, contre la force élastique de l'élément de ressort (8), **caractérisée en ce que** l'élément de ressort (8) est réalisé sous la forme d'un ressort avec une fonction de basculement, c'est-à-dire qu'il est conçu, au niveau constructif en ce qui concerne sa caractéristique de ressort, de telle manière qu'une force élastique élevée s'oppose au commencement à un actionnement de l'élément de commande (9), que la force élastique devienne brusquement très petite après une course d'actionnement déterminée et qu'elle reste petite sur le reste de la course d'actionnement.

3. Dispositif selon la revendication 1 ou 2, **caractérisé en ce que** la baisse brusque de la force élastique est provoquée par un changement de forme brusque correspondant de l'élément de ressort (8).

4. Dispositif selon l'une quelconque des revendications 1 à 3, **caractérisé en ce que** l'élément de ressort (8) est conçu de telle manière qu'il produise un bruit de claquement audible lors de la baisse brusque de la force élastique.

5. Dispositif selon l'une quelconque des revendications 1 à 4, **caractérisé en ce que** l'élément de ressort (8) est réalisé sous la forme d'un ressort spiral en métal.

6. Dispositif selon l'une quelconque des revendications 1 à 5, **caractérisé en ce que** l'élément de ressort (8) est réalisé sous la forme d'une lame en matériau à ressort, en particulier en acier à ressort, qui est dotée d'une courbure convexe, orientée dans la direction longitudinale, à l'opposé de la direction de l'actionnement par l'élément de commande (9).

7. Dispositif selon la revendication 6, **caractérisé en ce que** la lame formant l'élément de ressort (8) est pliée en forme de V environ au milieu de la longueur pour former la courbure convexe, ou **en ce que** la lame est pliée à plusieurs reprises l'une à côté de l'autre dans la direction longitudinale.

8. Dispositif selon l'une quelconque des revendications 1 à 7, **caractérisé en ce que** l'élément d'enclenchement (7) et l'élément de commande (9) sont réalisés en une seule pièce, en particulier d'un seul tenant, éventuellement avec l'élément de ressort (8).

9. Dispositif selon l'une quelconque des revendications 1 à 8, **caractérisé en ce que** la course élastique maximale de l'élément de ressort (8) est limitée par une butée ou un support bilatéral (11) de l'élément de ressort (8).

10. Dispositif selon l'une quelconque des revendications 1 à 9, **caractérisé en ce que** l'élément de commande (9) est réalisé sous la forme d'un bouton poussoir et peut être actionné par pression.
